(19) Europäisches Patentamt
European Patent Office
Office européen des brevets

(11) Veröffentlichungsnummer: **0 218 143**
**A2**


(12) # EUROPÄISCHE PATENTANMELDUNG


(21) Anmeldenummer: **86113137.3**

(22) Anmeldetag: **24.09.86**

(51) Int. Cl.⁴: **C 09 D 11/00**, C 09 B 35/00

(30) Priorität: **05.10.85 DE 3535661**

(43) Veröffentlichungstag der Anmeldung: **15.04.87 Patentblatt 87/16**

(84) Benannte Vertragsstaaten: **CH DE FR GB IT LI**



(71) Anmelder: **BAYER AG, Konzernverwaltung RP Patentabteilung, D-5090 Leverkusen 1 Bayerwerk (DE)**

(72) Erfinder: **Kunde, Klaus, Dr., Uppersberg 45, D-5090 Leverkusen 1 (DE)**


(54) **Aufzeichnungsflüssigkeit für die Verwendung in Tintenstrahl-Aufzeichnungssystemen.**


(57) Aufzeichnungsflüssigkeiten für Tintenstrahl-Aufzeichnungssysteme, die Farbstoffe der Formel

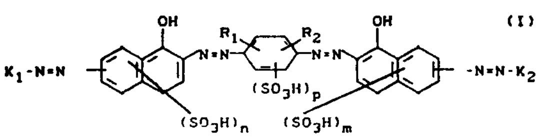

(I)

mit den in der Beschreibung genannten Substituentenbedeutungen enthalten, sind lagerstabil und liefern kontrastreiche, scharfe Bilder mit hoher Wasser-, Licht-und Abriebechtheit.


EP 0 218 143 A2

0218143

BAYER AKTIENGESELLSCHAFT 5090 Leverkusen, Bayerwerk
Konzernverwaltung RP
Patentabteilung My/li-c

Aufzeichnungsflüssigkeit für die Verwendung in Tintenstrahl-Aufzeichnungssystemen

Gegenstand der vorliegenden Erfindung ist eine Aufzeichnungsflüssigkeit für Tintenstrahl-Aufzeichnungssysteme, dadurch gekennzeichnet, daß sie einen Farbstoff der Formel

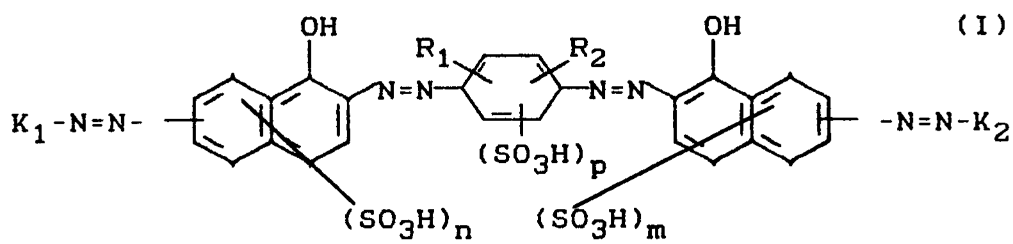
(I)

oder dessen Salze enthält,

worin

$K_1$, $K_2$ = Rest einer Kupplungskomponente aus der Reihe der Benzol-, Naphthalin- oder ß-Dicarbonylverbindungen oder der 5- oder 6-gliedrigen Stickstoff-Heterocyclen, welche höchstens eine Sulfogruppe enthält,

$R_1$, $R_2$ = H, Cl, $CH_3$, $OCH_3$, COOH,

n, m, p = 0 - 2, wobei die Gesamtzahl der Sulfogruppen im Molekül 2 - 6 beträgt.

Gegenstand der Erfindung ist auch die Verwendung derartiger Aufzeichnungsflüssigkeiten in Tintenstrahl-Aufzeichnungssystemen.

Bevorzugte Farbstoffe (I) sind dabei solche der Formel

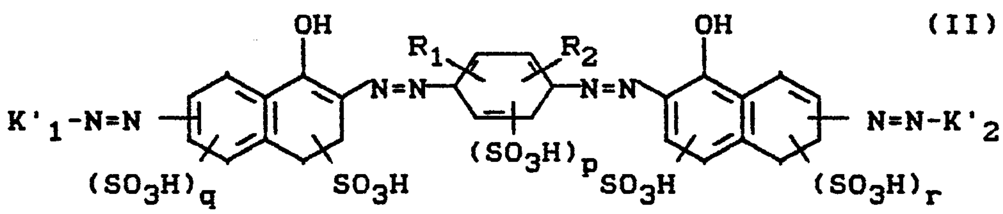

(II)

worin

$K'_1$,$K'_2$ = Rest einer Kupplungskomponente aus der Benzol-, Naphthalin-, Pyrazolon-, Pyridin-, Pyrimidin- oder Acetessigarylid-Reihe, die höchstens eine Sulfogruppe enthält,

q, r = 0 oder 1

und solche der Formel

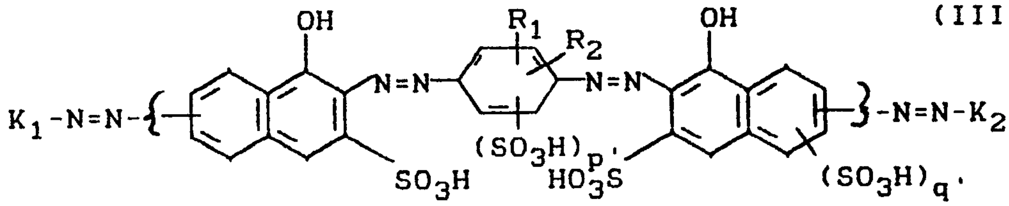

(III)

worin

p',q', = 0 oder 1.

Bevorzugte Farbstoffe I - III sind solche, in denen $K_1$, $K_2$, $K'_1$ und $K'_2$ Reste von Kupplungs-Komponenten der Formeln IV - XII darstellen.

Die Reste $K_1$ und $K_2$ können gleich oder verschieden sein.

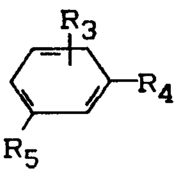 (IV), 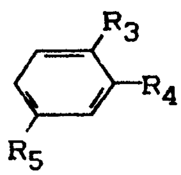 (V),

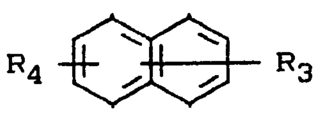 (VI), 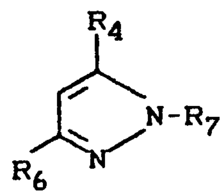 (VII),

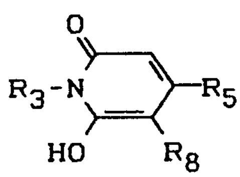 (VIII), 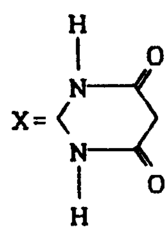 (IX),

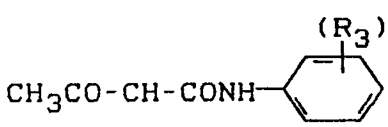 (X), 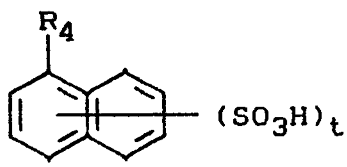 (XI),

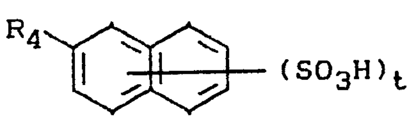 (XII),

worin

$R_3$ = H, Cl, $CH_3$, $OCH_3$, COOH, $SO_3H$
$R_4$ = OH, $NH_2$
$R_5$ = OH, $NH_2$, $NHCH_2COOH$, $NHCONH_2$, $NHCOCH_3$ oder $NHCOCH_2OH$
$R_6$ = H, $CH_3$, COOH, $COOCH_3$, $COOC_2H_5$
$R_7$ = H, Phenyl, 2-, 3- oder 4-Sulfophenyl
$R_8$ = H, CN, $CONH_2$, COOH, $SO_3H$
$R_9$ = H, $CH_3$
X = O, S, NH, NCN
s = 1 oder 2
t = 0 oder 1

Die Aufzeichnungsflüssigkeit kann einen oder mehrere Farbstoffe (I) enthalten.

Die Farbstoffe werden im allgemeinen in Form ihrer Salze eingesetzt, insbesondere der Alkalisalze (Li, Na, K), der Ammoniumsalze, Mono-, Di- oder Tris-$C_1$-$C_4$-alkyl-ammoniumsalze, insbesondere auch der $C_1$-$C_4$-Alkanolammoniumsalze.

Bevorzugte Ammoniumsalze sind dabei solche mit dem Kation

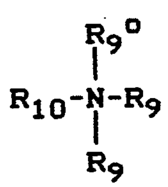

(XIII)

worin

$R_9$ = H, $C_1$-$C_4$-Alkyl, gegebenenfalls substituiert durch OH oder Hydroxy-$C_1$-$C_4$-alkoxy-$C_1$-$C_4$-alkyl, insbesondere $CH_3$, $C_2H_5$, $CH_2CH_2OH$, $CH_2CHOHCH_3$, $C_3H_6OC_2H_4OH$

$R_{10}$ = $C_1$-$C_4$-Hydroxyalkyl, $C_1$-$C_4$-Hydroxyalkoxy-$C_1$-$C_4$-alkyl, insbesondere $CH_2CH_2OH$, $CH_2CHOHCH_3$, $C_3H_6OC_2H_4O_4$.

Die Herstellung der Farbstoffe I erfolgt in an sich bekannter Weise durch Tetrazotierung von Diaminen der Formel

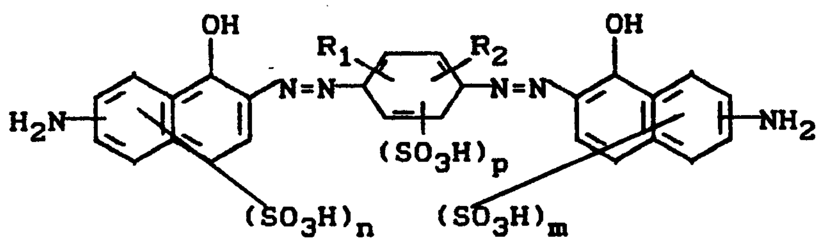

(XIV)

und Kupplung mit Kupplungskomponenten $K_1$-H und $K_2$-H.

Die erfindungsgemäßen Aufzeichnungsflüssigkeiten enthalten im allgemeinen etwa 1-20 Gew.-% eines oder mehrerer Farbstoffe (I), 80-99 Gew.-% Wasser und/oder polare protische oder dipolare aprotische Lösungsmittel sowie gegebenenfalls weitere übliche Bestandteile.

Bevorzugte Lösungsmittel sind dabei mehrwertige Alkohole und deren Äther oder Ester, Carbonsäureamide, Sulfoxide

und Sulfone, insbesondere solche mit Molekulargewichten < 200. Besonders geeignete Lösungsmittel sind beispielsweise: Ethylenglykol, Diethylenglykol, Triethylenglykol, Essigsäure-2-hydroxyethylester, Essigsäure-2-(2'-hydrodroxy)-ethylester, Glycerin, 1,2-Dihydroxypropan, 1-Methoxy-2-propanol, 2-Methoxy-1-propanol, N,N-Dimethylformamid, N,N-Dimethylacetamid, Formamid, N-Methylpyrrolidon, ε-Caprolactam, N-Methyl-ε-caprolactam, Tetramethylharnstoff, 1,3-Dimethyl-2-imidazolidinon, N,N'-Dimethylpropylenharnstoff, Dimethylsulfoxid, Dimethylsulfon, Sulfolan.

Die erfindungsgemäßen Tinten werden z. B. durch Auflösen der Farbstoffe (I) in Wasser und/oder einem oder mehreren der oben genannten organischen Lösungsmitteln, gegebenenfalls bei erhöhten Temperaturen und unter Zusatz von anorganischen oder organischen Basen hergestellt; gegebenenfalls können zusätzlich noch übliche ionische oder nichtionische Zusatzstoffe verwendet werden, z. B. solche mit denen die Viskosität erniedrigt und/oder die Oberflächenspannung erhöht werden können.

Als anorganische Basen können z. B. Lithiumhydroxid, Natriumhydroxid, Kaliumhydroxid, Lithiumcarbonat, Natriumcarbonat, Kaliumcarbonat eingesetzt werden.

Als organische Basen können z. B. Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Di-isopropanolamin, N-2-Hydroxyethyldiisopropanolamin, Tris-N,N,N-[2-(2'-Hydroxyethoxy-)ethyl]-amin oder Natriummethylat, Lithiumethylat, Kalium-tert.-butylat dienen.

Bei der Verwendung der erfindungsgemäßen Farbstoffe in Ink-Jet-Tinten erhält man kontrastreiche, scharfe Bilder mit hoher Wasser-, Licht- und Abriebechtheit.

Die erfindungsgemäßen Tinten sind lager- und gebrauchsstabil, ihre Viskosität und ihre Oberflächenspannung sind den unterschiedlichen Erfordernissen anpassbar; sie besitzen gute Aufzeichnungsfähigkeit und Strahlstabilitäten.

0218143

Beispiel 1

3 g des Farbstoffes der Formel (a)

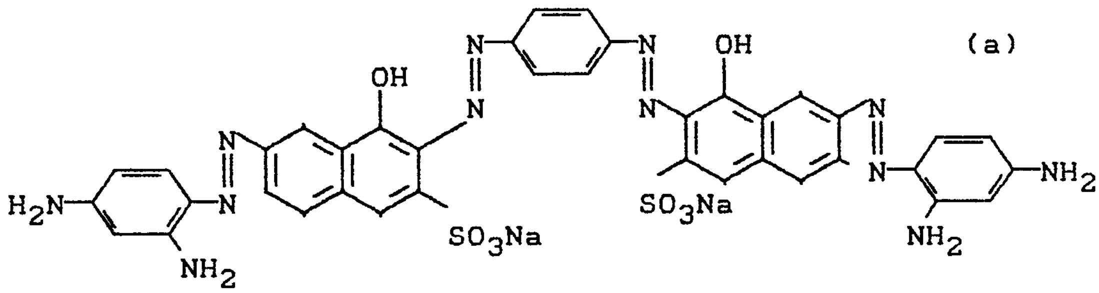

(a)

werden bei Raumtemperatur in 67 g Wasser und 30 g Diethylenglykol gelöst; die Lösung wird durch ein 1-µ-Filter filtriert und anschließend unter Vakuum entgast. Man erhält eine schwarze Tinte, die licht-, reib- und wasserechte Aufzeichnungen liefert.

$\lambda_{max}$ = 662 nm

Beispiel 2-8

Verwendet man statt des in Beispiel 1 eingesetzten Farbstoffes einen der Formel (b) - (h), so erhält man ebenfalls schwarze Tinten, die licht-, reib- und wasserechte Aufzeichnungen liefern.

$\lambda_{max}$

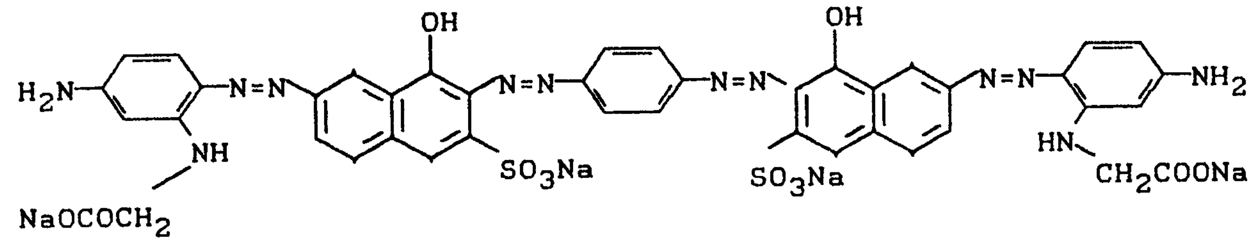

(b) 618 nm

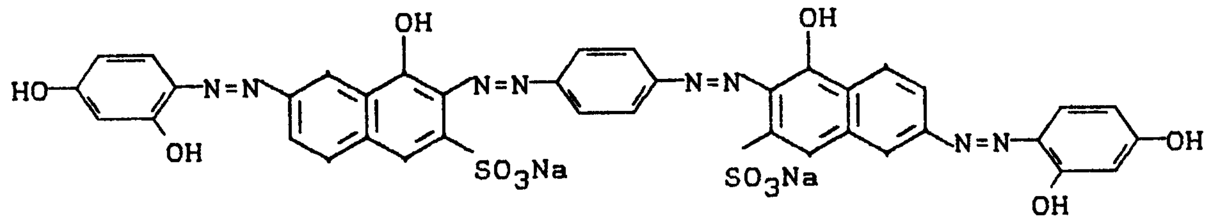

(c) 596 nm

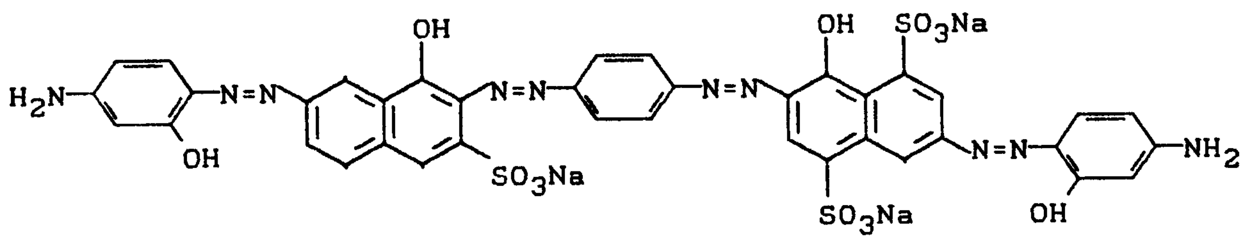

(d) 617 nm

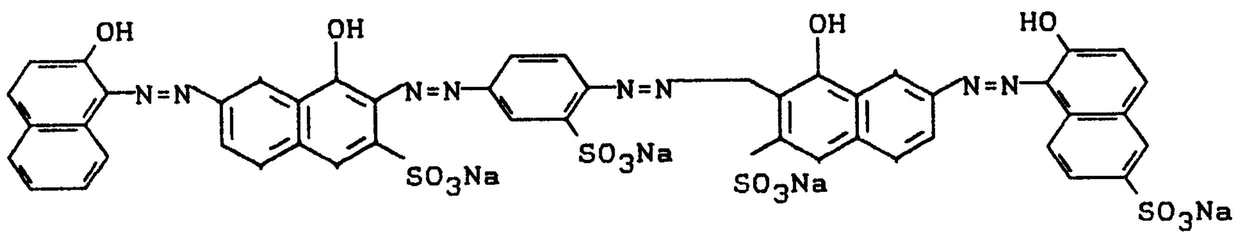

(e) 613 nm

$\lambda_{max}$

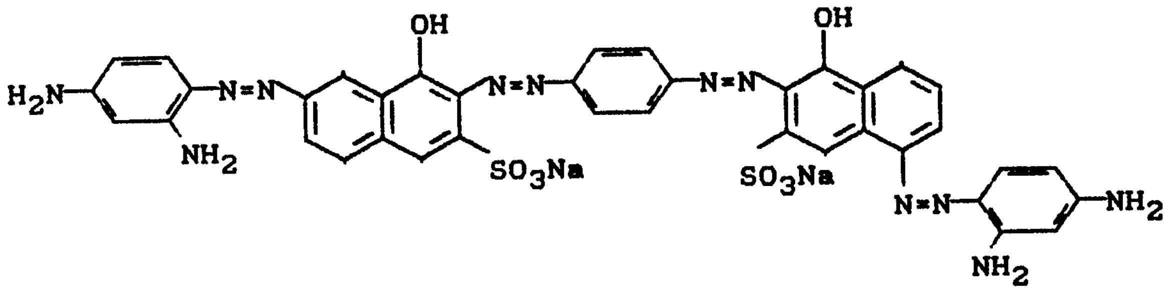

(f) 548 nm

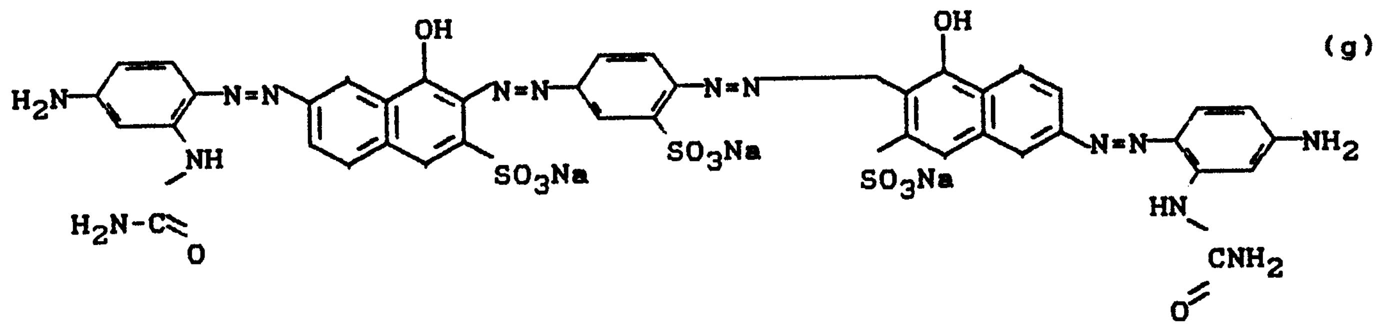

(g) 654 nm

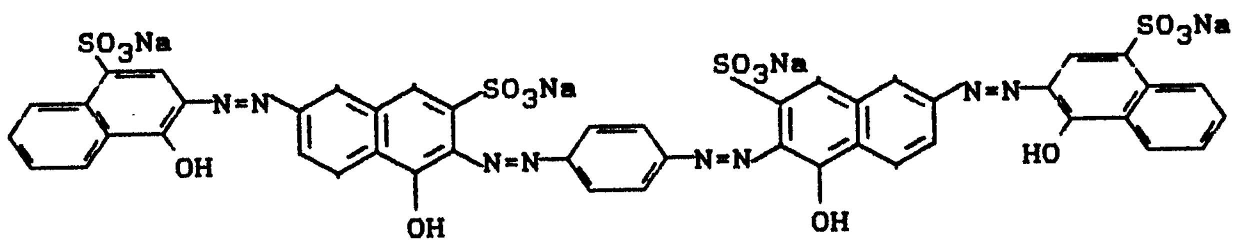

(h) 590 nm

Beispiel 9

3 g des Farbstoffes der Formel (i) werden bei Raumtemperatur in 30 g Dimethylsulfoxid und 67 g Ethylenglykol gelöst; die Lösung wird durch ein 1-µ-Filter filtriert und anschließend im Vakuum entgast. Man erhält eine schwarze Tinte, die licht-, reib- und wasserechte Aufzeichnungen liefert.

(i)

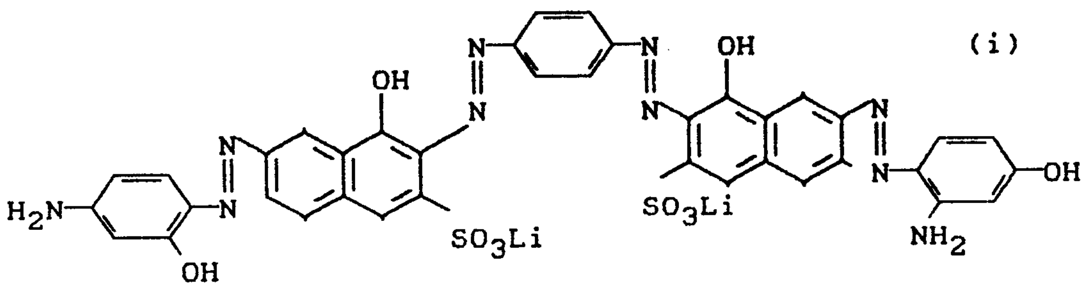

$\lambda_{max}$ = 458 nm

Beispiel 10-15

Verwendet man statt des in Beispiel 9 eingesetzten Farbstoffes einen der Formeln (k) - (o), so erhält man ebenfalls schwarze Tinten, die licht-, reib- und wasserechte Aufzeichnungen liefern.

λmax

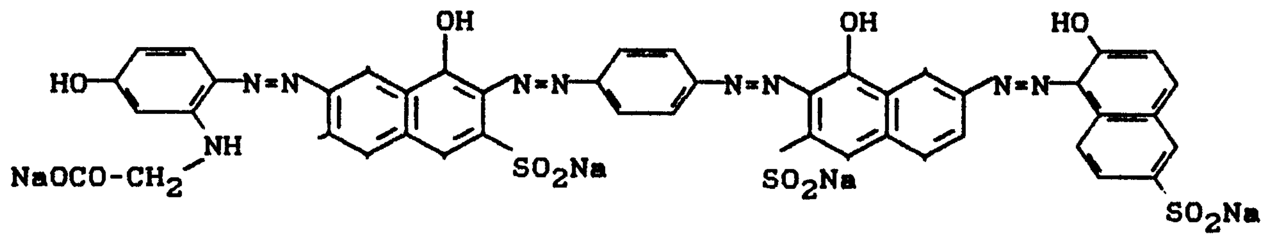

(k) 548 nm

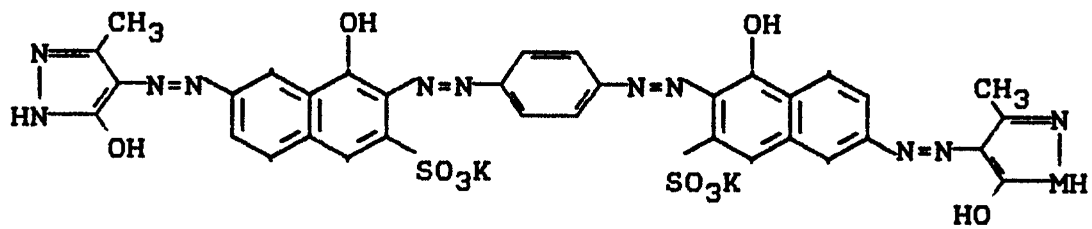

(l) 580 nm

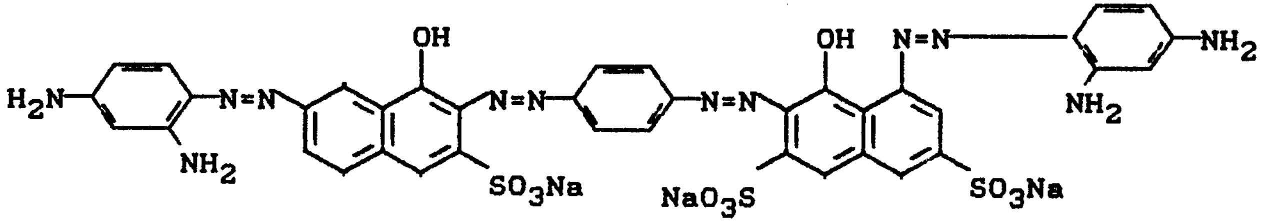

(m) 464 nm

| | | $\lambda_{max}$ |
|---|---|---|
| 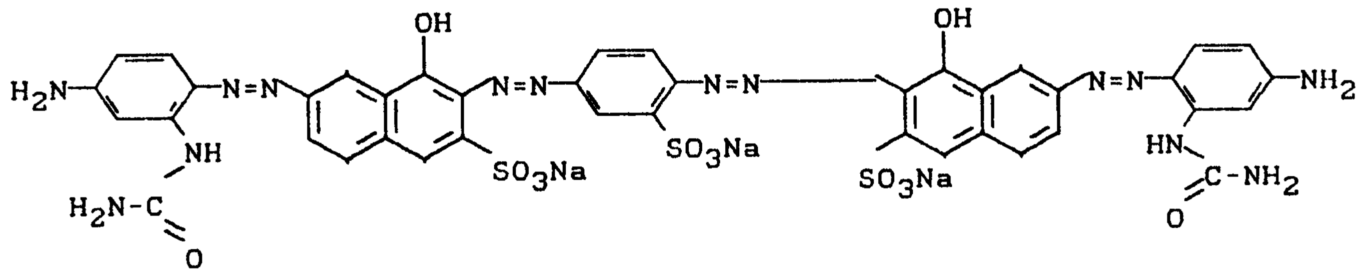 | (n) | 632 nm |
| 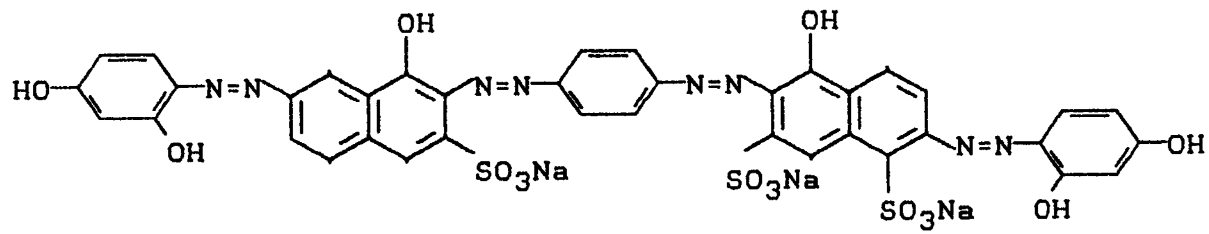 | (o) | 596 nm |

Beispiel 16

3 g des Farbstoffes der Formel (p) werden bei Raumtemperatur in 20 g ε-Caprolactam, 60 g Wasser und 17 g Glycerin gelöst; die Lösung wird durch ein 1-μ-Filter filtriert und anschließend im Vakuum entgast. Man erhält eine schwarze Tinte, die licht-, reib- und wasserechte Aufzeichnungen liefert.

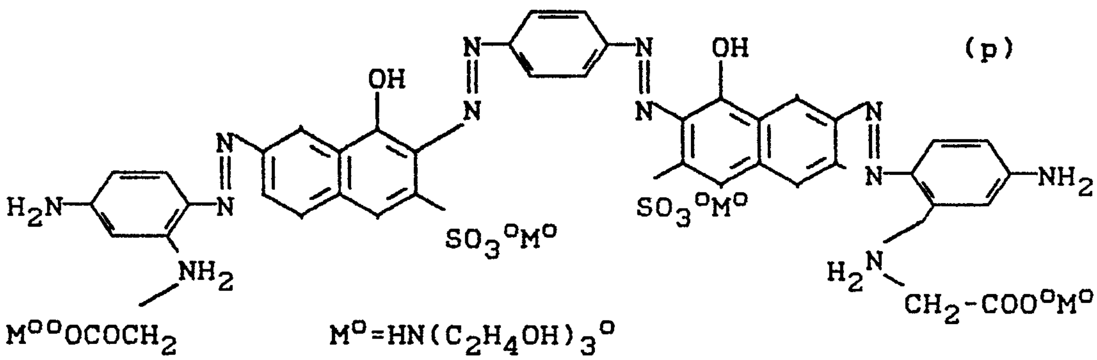

(p)

$M^{\oplus} = HN(C_2H_4OH)_3^{\oplus}$

$\lambda_{max}$ = 618 nm

Beispiel 17-22

Verwendet man statt des in Beispiel 16 eingesetzten Farbstoffes einen der Formeln (q) - (v), so erhält man ebenfalls schwarze Tinten, die licht-, reib- und wasserechte Aufzeichnungen liefern.

$\lambda_{max}$

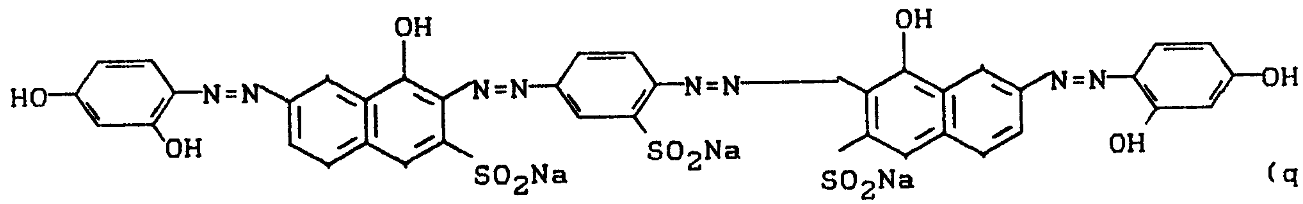

(q) 601 nm

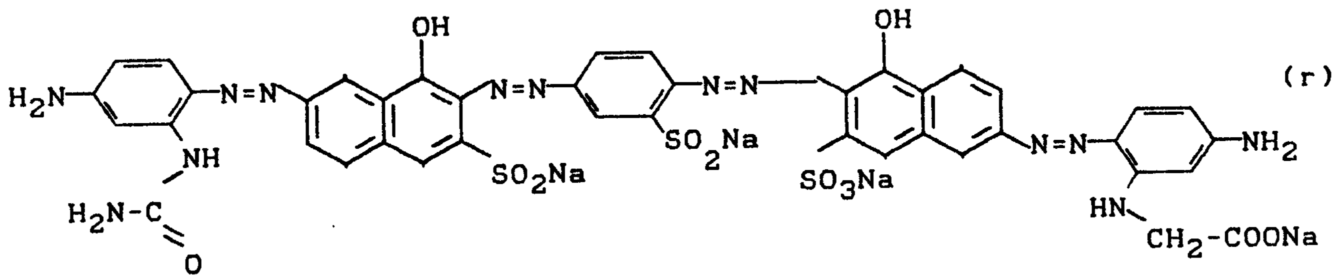

(r) 651 nm

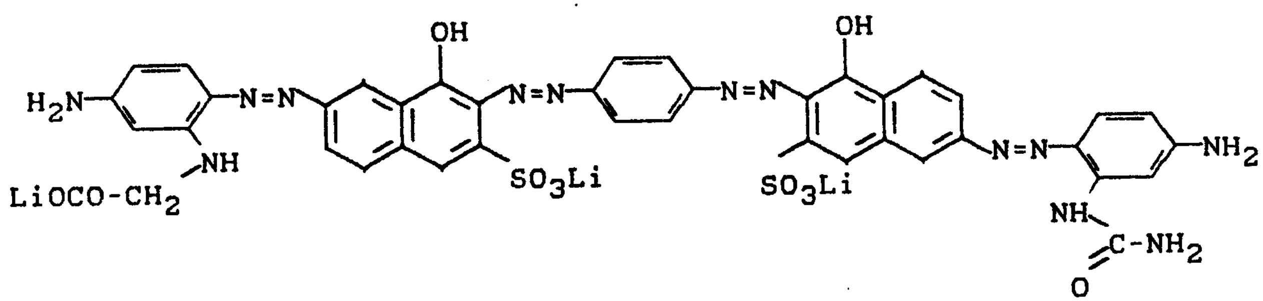

(s) 602 nm

$\lambda_{max}$

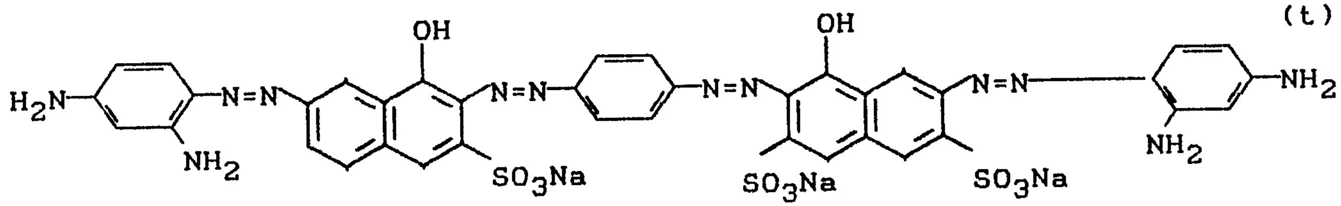

(t) 635 nm

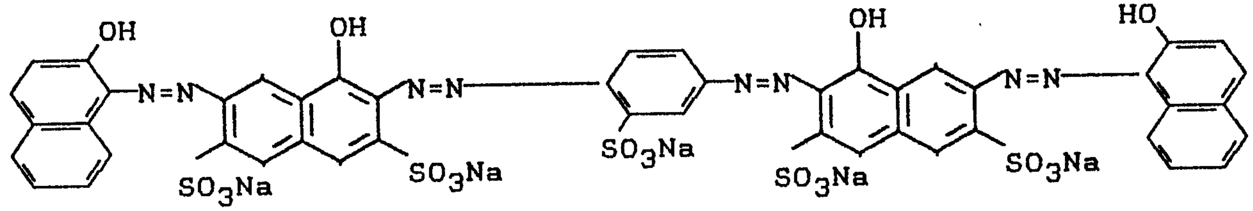

(u) 607 nm

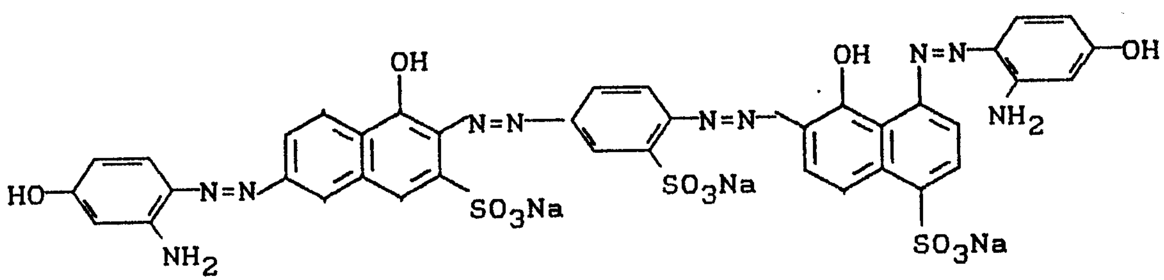

(v)

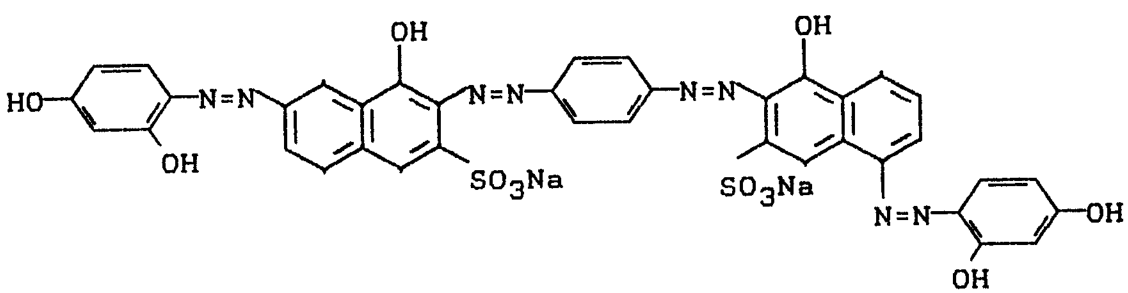

(w)

0218143

## Patentansprüche

1. Aufzeichnungsflüssigkeit für Tintenstrahl-Aufzeichnungssysteme, dadurch gekennzeichnet, daß sie einen Farbstoff der Formel

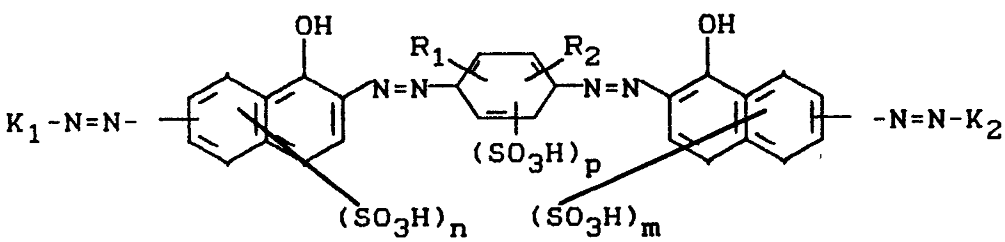

oder dessen Salze enthält,

worin

$K_1$, $K_2$ = Rest einer Kupplungskomponente aus der Reihe der Benzol-, Naphthalin- oder β-Dicarbonylverbindungen oder der 5- oder 6-gliedrigen Stickstoff-Heterocyclen, welche höchstens eine Sulfogruppe enthält,

$R_1$, $R_2$ = H, Cl, $CH_3$, $OCH_3$, COOH

n,m,p = 0 - 2,

wobei die Gesamtzahl der Sulfogruppen im Molekül 2-6 beträgt.

2. Aufzeichnungsflüssigkeit gemäß Anspruch 1, gekennzeichnet durch einen Gehalt an Farbstoff der Formel

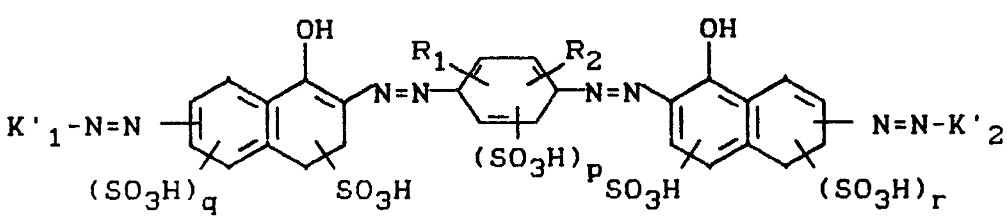

worin

$K'_1$, $K'_2$ = Rest einer Kupplungskomponente aus der Benzol-, Naphthalin-, Pyrazolon-, Pyridin-, Pyrimidin- oder Acetessigarylid-Reihe, die höchstens eine Sulfogruppe enthält,

q, r = 0 oder 1.

3. Aufzeichnungsflüssigkeit gemäß Anspruch 1, gekennzeichnet durch einen Gehalt an Farbstoff der Formel

(III)

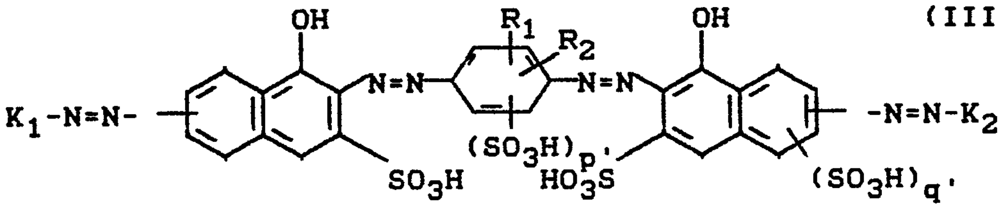

worin p' und q' = 0 oder 1.

4. Verwendung der Aufzeichnungsflüssigkeiten gemäß Ansprüchen 1-3 in Tintenstrahl-Aufzeichnungssystemen.